# EUROPEAN PATENT APPLICATION

(11) **EP 3 786 952 A1**
(43) Date of publication of application: **03.03.2021**
(21) Application number: 19194718.3
(22) Date of filing: 30.08.2019
(51) Int. Cl.: G10L 25/51, G06F 16/683, G06N 3/04, G06N 3/08, G06F 16/00, G10H 1/00, G10L 25/30

(54) **ASSESSING SIMILARITY OF ELECTRONIC FILES**

(71) Applicant: Playground Music Ltd, Dublin 2 (IE)
(72) Inventor: Miller-Frankel, Zachary, Dublin 2 (IE); Dunne, Neil, Dublin 2 (IE)
(74) Representative: Tomkins & Co

(57) **Abstract**

A system and method is provided for assessing similarity between audio files, in particular music files.

## Description

### Field of the Invention

The present invention is directed to assessing similarity of electronic files. In particular it is directed to assessing the similarity of content of electronic audio files.

### Background to the Invention

Electronic audio files are increasingly used as a source for access to audio content. In recent years, audio files such as MP3 files have overtaken other media such as cassettes and CDs for the storage and playback of audio content. Such electronic audio files provide convenience to the user as large amounts of content can be stored on small devices. Furthermore, streaming type services provide access to electronic audio content without the need for a user to have an audio file saved directly to their device. This type of access to audio content can provide users with an almost overwhelming level of choice when deciding which audio content to access. For example, with respect to audio files containing music produced by recording artists, a user with a streaming service is provided with access to a vast array of recording artists with which they may not be familiar. Sorting through such content by a user in order to find music which is to their taste can prove unwieldy. Recommendation type engines are limited in their functionality and may recommend, for example, artists from the same recording label, who do not necessarily produce the same type of music. Assessing the degree of similarity between the audio content of files would be an improvement on the state of the art.

### Summary of the Invention

The present invention provides a method for assessing similarity between audio files in a neural network comprising:
importing training data in the form of a plurality of training audio files in a first format;
importing test data in the form a plurality of test audio files in the first format;
   converting the training audio files from the first format to a second format, the second format comprising a plurality of audio metric identifiers;
   inputting a first plurality of associations between a first converted set of the plurality of training audio files and a second converted set of the plurality of training audio files to create a training graph database;
   converting the test audio files from the first format to the second format;
   inputting a second plurality of associations between a first set of the plurality of test audio files and a second set of the plurality of test audio files to create a test graph database;
   inputting the training graph database into a neural network to train the network;
   generating via the neural network a third plurality of associations between the first set of the plurality of test audio files and the second set of the plurality of test audio files to create a neural graph database;
   comparing the test graph database with the neural graph database;
   assessing a similarity between the test graph database and the neural graph database;
   updating the neural network based on the assessed similarity between the test graph database and the neural graph database.

This is advantageous as it provides that a degree of similarity in the content of two audio files may be established. The training graph database provides an indication of the similarity between a first converted set of the plurality of training audio files and a second converted set of the plurality of training audio files based on inputting a first plurality of associations. This first plurality of associations may be provided by a user who can define the extent to which a first audio file is similar to a second audio file. The first plurality of associations may also be automatically generated. The extent of the similarity can be provided as a percentage. For example, a user may define an audio file from a first converted set of the plurality of training audio files to be 90% similar to an audio file from a second converted set of the plurality of training audio files. The degree of similarity is assessed by the user based on, for example, the audio metric make-up of the audio files. For example, in the case of audio files comprising music, the user may make their assessment as to the percentage similarity based on a combination of instrument types and sound, vocal type and sound, sound intensity, rhythm and tempo.

A training graph database is generated comprising a set of percentage based associations between audio files, wherein a higher percentage indicates a greater degree of similarity between the two files from a plurality of training audio files. A test graph database is generated comprising a new set of percentage based associations between audio files from a plurality of test audio files. As before, the associations may be provided by a user who can define the extent to which a first audio file is similar to a second audio file or the associations may also be automatically generated.

A third plurality of associations may be generated via the neural network between the first set of the plurality of test audio files and the second set of the plurality of test audio files to create a neural graph database.

In the neural graph database however, the percentage similarity is not user defined, but rather generated automatically by the neural network. A comparison of the test graph database and the neural graph database provides an indication of the accuracy of the automatically generated percentage similarities.

The neural network may be modified or updated based on the comparison. In addition, by updating the training data and the plurality of audio metric identifiers based on the comparison between the training graph database with the neural graph database, the accuracy of the degree of similarity may be improved.

Assessing the similarity between the training graph database and the neural graph database may comprise generating a comparison report indicating the differences between the test graph database and the neural graph database.

This is advantageous as it provides a manner in which to assess the accuracy of the automatically generated associations in the neural graph database. For example, if the training graph database indicates a 90% similarity between two audio files and the neural graph database indicates a 50% similarity between two audio files, the training data may be updated to provide more of this file type so that this file type may be more accurately identified. Furthermore, the plurality of audio metric identifiers in the second format may be updated to provide more objects for comparison between two audio files. This further provides for a more accurate assessment of the degree of similarity between two files.

The first plurality of associations may comprise a plurality of percentage values indicating a percentage similarly between each of the first converted set of the plurality of training audio files and each of the second converted set of the plurality of training audio files.

This is advantageous as it provides a measure of the similarity between two audio files. For example, files which are very dissimilar (for example with respect to music files, this may mean very different rhythm, instrument sounds and intensity) will have a low percentage similarity value (e.g. 5% similarity) while files which are very similar (for example with respect to music files, this may mean very similar rhythm, instrument sounds and intensity) will have a high percentage similarity value (e.g. 95% similarity).

The audio metric identifiers may comprise one or more of a range of frequencies, a frequency threshold, a sound intensity, tonal purity and pitch, a spectral envelope.

This is advantageous as it provides a number of audio "elements" which can be used to assess the degree of similarity between two audio files. Two files which are found to have a very similar range of frequencies, frequency threshold, sound intensity, tonal purity and pitch and/or similar a spectral envelopes will have will have a high percentage similarity value (e.g. 95% similarity).

The first file format prior to conversion to the second file format may be MP3. This is advantageous as it provides for importing and handling of audio files in a format which is commonly stored and utilised.

The method may be implemented in at least one of a server, a mobile communication device, a laptop computer, a desktop computer, a web application or any combination thereof. This is advantageous as it provides that the method can be implemented across numerous platforms and provides that users of the may interact using numerous types of interface.

The present invention further comprises a system for assessing similarity between audio files in a neural network comprising a processor configured to:
import training data in the form of a plurality of training audio files in a first format;
import test data in the form a plurality of test audio files in the first format;
convert the training audio files from the first format to a second format, the second format comprising a plurality of audio metric identifiers;
receive an input of a first plurality of associations between a first converted set of the plurality of training audio files and a second converted set of the plurality of training audio files to create a training graph database;
convert the test audio files from the first format to the second format;
receive an input of a second plurality of associations between a first set of the plurality of test audio files and a second set of the plurality of test audio files to create a test graph database;
input the training graph database into a neural network to train the network;
generate via the neural network a third plurality of associations between the first set of the plurality of test audio files and the second set of the plurality of test audio files to create a neural graph database;
compare the training graph database with the neural graph database;
   assess a similarity between the test graph database and the neural graph database;
update the neural network based on the comparison between the test graph database with the neural graph database.

The present invention further comprises a method for searching audio files comprising:
receiving an identifier of a first audio file; the audio file comprising a plurality of audio metric identifiers;
searching a database of audio files, the audio files comprising a plurality of audio metric identifiers;
comparing the plurality of audio metric identifiers of the first audio file to the a plurality of audio metric identifiers of the of audio files in the database of audio files;
outputting a list of audio files from the database of audio files, wherein the list comprises audio files from the database wherein the values of the plurality of audio metric identifiers correspond to values of the plurality of audio metric identifiers of the first audio file.

This is advantageous as it provides that files are provided from the database of audio files with a degree of similarity of the first audio file. In this manner, a user may be provided with files from a database which are similar in content to the first audio file.

The audio metric identifiers may comprise one or more of a range of frequencies, a frequency threshold, a sound intensity, tonal purity and pitch, a spectral envelope. As above, this is advantageous as it provides a number of audio "elements" which can be used to assess the degree of similarity between two audio files. Two files which are found to have a very similar range of frequencies, frequency threshold, sound intensity, tonal purity and pitch and/or similar a spectral envelopes will have will have a high percentage similarity value (e.g. 95% similarity). The values of the plurality of audio metric identifiers may correspond in terms of a percentage similarity to the values of the plurality of audio metric identifiers of the first audio file. The identifier of a first audio file further comprises a selected range of percentage similarity for at least one of the plurality of audio metric identifiers.

This is advantageous as a user may be provided with a list of files from a databases wherein the percentage similarity to the first audio file is provided. For example, the user may be provided with a list of files from a database which are assessed to be 90% similar to the first audio file. Alternatively, the user may provide a selected range of percentage similarity and be provided with results based on the selected range. For example, a user may provide a selected range of 70 % to 90% and be provided with files from the database which, based on the plurality of audio metric identifiers, to be between 70% to 90% similar to the first audio file.

The present invention further comprises a system for searching audio files comprising, a processor configured to: receive an identifier of a first audio file; the audio file comprising a plurality of audio metric identifiers; search a database of audio files, the audio files comprising a plurality of audio metric identifiers; compare the plurality of audio metric identifiers of the first audio file to the a plurality of audio metric identifiers of the of audio files in the database of audio files; output a list of audio files from the database of audio files, wherein the list comprises audio files from the database wherein the values of the plurality of audio metric identifiers correspond to values of the plurality of audio metric identifiers of the first audio file.

### Brief Description of the Drawings

**Figure** 1 is a flowchart of a method for assessing similarity between audio files in accordance with the present invention
**Figure 2** is a flow chart of a user search of a database
**Figure 3** is a flow chart of a user or artist registration

### Detailed Description

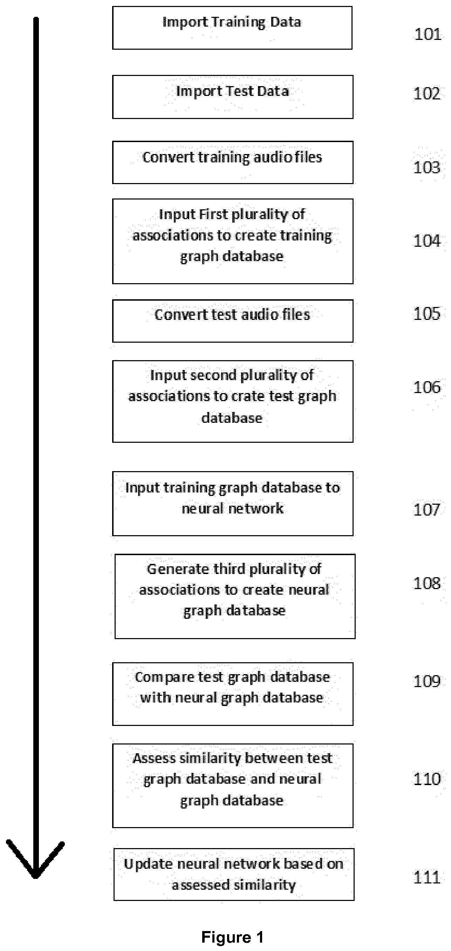

The present invention may be used to assess the similarity in the content of audio files. The method (**Figure 1**) may be implemented in at least one of a server, a mobile communication device, a laptop computer, a desktop computer, a web application or any combination thereof. The configuration and use of the invention is described below using the example of audio files comprising musical content. However, other types of audio file content may be assessed.

A method for assessing similarity between audio files, such as music files, in a neural network comprises importing training data 101 in the form of a plurality of training music files in a first format. Test data in the form a plurality of test music files is also imported 102 in the first format. The first format may be MP3 or .WAV files or any other type of digital music file. The training music files are converted 103 from the first format to a second format, the second format comprising a plurality of audio metric identifiers. The second format may be provided by a proprietary format hereafter described as the Andrson Proprietary Format (APF). The APF format provides a modified or filtered version of an original MP3 file. The APF format filters out unwanted traits from the original track, which are not considered to be distinguishing factors for the neural network and provides a filtered or segmented file comprising a series of distinguishing traits of the original track. Thus, the format comprises audio metric data that is distinguishing for a particular audio file, e.g. frequency threshold, sound intensity, tonal purity and pitch.

A first plurality of associations between a first converted set of the plurality of training music files and a second converted set of the plurality of training music files are input to create a training graph database 104. For example, a music expert may create a sample catalogue of track segments for a defined set of artists. This can form a first plurality of training music files. One or more track segments shall be chosen for a given artist. These tracks segments shall be representative of the totality of the artist's work, i.e. these segments are considered representative of the artists overall "sound".

The music expert shall define the associations between each of the segments in the totality of the sample catalogue. The associations between each segment shall be defined in terms of percentages. For example, an association can made between a first segment of music from a first artist and a first segment from a second artist. The segments may be defined by the expert to be 90% similar. The percentage similarity may be based on a combination of instrument types and sound, vocal type and sound, sound intensity, rhythm and tempo. As more associations are made by the expert, a set of training data is created in which the degree of similarity between different track segments is provided. For example, the training data will contain associations between segments which have been decided as being within a range of similarities between 0% (completely dissimilar) to 100% (i.e. identical segments). In effect, the training data provides examples of what each degree of similarly "sounds" like. This data may be then used subsequently to automatically assess the degree of similarity between two new segments without the requirement for the input of a musical expert. The initial expert input is thus used to calibrate the method providing that subsequent analysis may be automated. In effect, the training graph database is utilised in order to train the neural network to create associations in the same manner as a music expert.

As mentioned above, test data in the form a plurality of test music files is imported 102 in the first format. The test music files are converted from the first format to the second format 105, the APF format. Based on the input of the musical expert, a second plurality of associations between a first set of the plurality of test audio files and a second set of the plurality of test audio files is inputted to create a test graph database 106. The training graph database is input into the neural network 107 to train the network. The test graph database serves as a tool to compare the "trained" output of the neural network to the associations created by a musical expert. Once the neural network has been trained, it is capable of producing its own associations when provided with input data. Thus, the neural network generates plurality of associations between the first set of the plurality of test audio files and the second set of the plurality of test audio files to create a neural graph database 108. The neural graph database represents the neural networks attempt at forming associations between the track segments.

The graph databases comprise a graph structure whereby a series of nodes represent the segments of audio tracks and links between the nodes represent the associations created between the nodes. For example a first node in a graph database may represent a Segment A of an audio file (e.g. a musical track A). A second node may represent a Segment B of another audio file (e.g. a musical track B). The links between the nodes define the associations between the nodes (and hence the track segments) and represent a similarity with respect to one of the audio metric identifiers such as pitch, e.g. Segment A 90% similar to Segment B with respect to pitch. Thus, as more associations are created between the first and second nodes, the more accurately the "similarity" between the nodes (and hence the track segments) can be assessed.

For example, between the first and second nodes, associations may be made with respect to the range of frequencies, the frequency threshold, the sound intensity, tonal purity and pitch and a spectral envelope. The percentage similarity across each of these identifiers may be individually assessed. A percentage similarity may be assigned to each identifier. Furthermore, the individual percentages associated with each identifier may be weighted and averaged to provide an overall percentage similarity between the two nodes. As such, this provides that an output or assessment can be provided such as "Segment A is 85% similar to Segment B".

Initially, the associations may be input by an expert based on their assessment of the similarity between two given musical segments. Such expert analysis can be used to create training and test graph databases. The training database can be used to provide a neural network with examples of "correct" associations and thus provide the network with an initial basis to generate its own associations. The networks own associations can be used to create a neural graph database, from which the accuracy of the neural networks output can be assessed. Updates and modifications to the network based on a comparison of the neural graph database with test graph databases can be used to improve the accuracy of the neural networks associations. Over a number of iterations, the neural graph database should show almost complete agreement with the test graph database meaning that the associations between musical segments generated by the network would be considered to be the same as associations (within a given tolerance) that would have been made by a musical expert. In effect, the neural network is then capable of accurately assessing the similarity of two musical segments.

The test graph database and the neural graph database are compared 109 and the similarity between the training graph database and the neural graph database is assessed 110. As described further below, a comparison report may be generated in order to ascertain the accuracy of the automatically generated graph database from the neural network and the test graph database generated based on expert input. The automatically generated neural graph database may be produced as a result of a neural network analysis of the test data. Based on the associations created for the training data, the network attempts to assess the degree of similarity between audio files.

The neural network may be updated and modified based on the assessed similarity 111. The neural network may be updated by means of user input or alternatively, the network may automatically update based on the assessed similarity. Furthermore, the accuracy of the neural network in assessing the similarity between files may be improved by updating the training data and the plurality of audio metric identifiers based on the comparison between the test graph database with the neural graph database.

For example, an administrator may request the system to compare the test graph database with the neural graph database. A comparison report is generated by the system based on the accuracy of the neural network output (i.e. how closely the test graph database correlates with the neural graph database). Based on this report, the administrator may opt to modify the test data or the training data or both. Furthermore, the administrator may opt to modify the amount or type of audio metric identifiers which are comprised in the second file format. Alternatively, the system may be configured to automatically provide new test and training data from a database. The system may be further configured to update the neural network to take account of "correct" or "incorrect" association between two segments.

As such, the comparison provides an equivalence of the graph database structures. For example, the comparison will establish if all graph nodes (track segments) from the test database are associated in the same way as the graph nodes in the neural database. Furthermore, the comparison can establish if the associations between nodes work within defined thresholds. For example, a 5% variance may be allowed between an association defined in the test graph database and an associations defined by the neural graph database. For example, if the user defined test graph database defines Segment A and Segment B to be 90% similar, a neural network finding of 85% to 95% similar may be considered to be a "correct" association. However, a neural network finding of more than 5% variance (from example a neural network finding of 80% similarity) from the test graph database value may be considered an "incorrect" association.

The comparison report may list out the node names within the neural graph database and its associations that do not meet the allowed variance (tolerance).

A sample output for an Association Analysis may read:
*"Track Segment A Association A 1" Pitch 50% variation with "Track Segment B Association B1"*
*"Track Segment A Association A2" Tempo 30% variation with "Track Segment C Association C4"*

In the above case, the association between two nodes is in agreement but the percentage similarity is outside the accepted range for a "correct" association.

A sample output for a Structural Analysis may read:
*"Track Segment X incorrectly associated with Track Segment Y"*

In the above case, the association between two nodes not correct, i.e. two musical segments have been incorrectly linked meaning the two graph databases being compared are structurally different.

Assessing the similarity of audio files in this manner allows for percentage similarities between different audio files to be ascertained. Furthermore, if groupings of audio files are associated with a given artist, then a percentage similarity can be ascertained between a group of audio files from a first artist and from a second artist. In this manner, information can be provided in the form of "Artist A is 90% similar to artist B". Similarly, a user may request information in the form of lists of artists which are, for example 90% similar to Artist A. A method for handling such requests for information is outlined below:

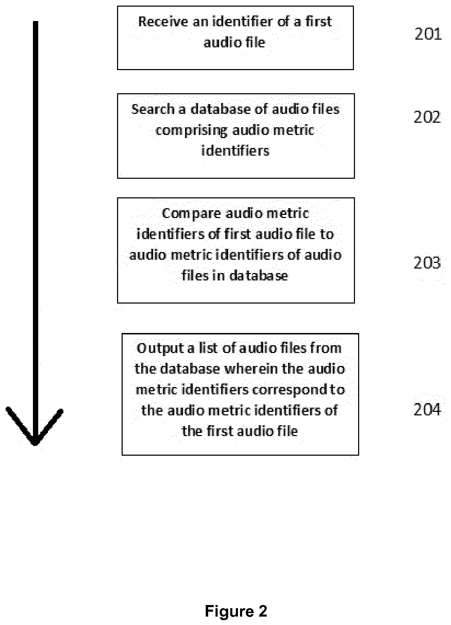

**Figure 2** describes a method for searching audio files using the "trained" system as described above. The method comprises receiving an identifier of a first audio file 201; the audio file comprising a plurality of audio metric identifiers. The identifier of the first audio file could be for example a band name or artist name as input by a user. The audio metric identifiers are a series of identifiers which serve to isolate the "sound" of a given artist as described above. The method comprises searching a database of audio files 202, the audio files comprising a plurality of the audio metric identifiers.

The method comprises comparing the plurality of audio metric identifiers of the first audio file of the selected artist to the plurality of audio metric identifiers of audio files in the database of audio files 203. The method then provides for outputting a list of audio files from the database of audio files, wherein the list comprises audio files from the database wherein the values of the plurality of audio metric identifiers correspond to values of the plurality of audio metric identifiers of the first audio file 204. The audio files in the list can thus correspond to further artists in which the audio metric identifiers are considered to correspond to the audio metric identifiers of the selected artist.

Furthermore, the identifier of a first audio file, such as the band name may further comprise a selected range of percentage similarity for at least one of the a plurality of audio metric identifiers. For example, a band name can be provided along with a percentage similarity range such as 75% - 90%. Thus, a list of audio files corresponding to artists who are 75% to 90% similar to the selected artist may be provided. A search may be performed, for example, by a user looking for artists with a particular "sound". The user searches, by providing an input to the system hosted on a computer or other electronic device, for artists who are 80% similar to "U2". If no such artists are found, then no search results are returned and the search can be refined. Alternatively, if artists are found, a list is returned providing artists which are the closest match to the selected criteria. Furthermore, combination type searches may be performed wherein a search is performed for artists that are 80% similar to "U2" and 20% similar to "Echo and the Bunnymen".

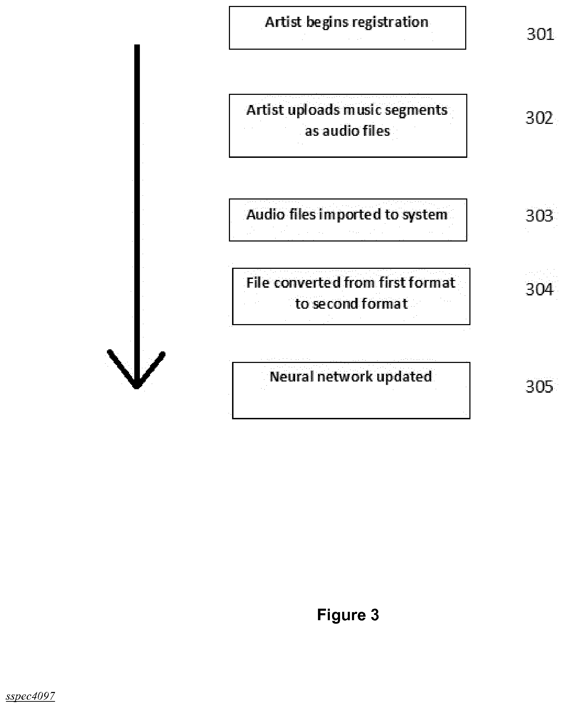

Furthermore, artists may upload their own segments of music to the system as audio files. **Figure 3** describes the interaction of a new artist with the system of the present invention. The artist begins the registration process 301, by for example, logging onto a website hosting the system or via an app providing a gateway to the system. Once registered, the artist may upload their music segments as audio files 302. The artists may consider the segments to be representative of the "sound" of their musical oeuvre. The audio files are imported into the system 303, typically as MP3 files, although it is possible to upload audio files in a number of formats. Once uploaded, the files are converted from MP3 to a second format 304 such as the APF format as previously described. The system can generate associations with the artist segments already in the system database so that a percentage similarity between the new artist and existing artists may be established as described above. In this manner, an updated neural network comprising the new artists segments is provided 305.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method for assessing similarity between audio files in a neural network comprising:
importing training data in the form of a plurality of training audio files in a first format;
importing test data in the form a plurality of test audio files in the first format;
converting the training audio files from the first format to a second format, the second format comprising a plurality of audio metric identifiers;
inputting a first plurality of associations between a first converted set of the plurality of training audio files and a second converted set of the plurality of training audio files to create a training graph database;
converting the test audio files from the first format to the second format;
inputting a second plurality of associations between a first set of the plurality of test audio files and a second set of the plurality of test audio files to create a test graph database ;
inputting the training graph database into a neural network to train the network;
generating via the neural network a third plurality of associations between the first set of the plurality of test audio files and the second set of the plurality of test audio files to create a neural graph database;
comparing the test graph database with the neural graph database ;
assessing a similarity between the test graph database and neural graph database;
updating the neural network based on the assessed similarity between the test graph database and the neural graph database.

2. The method of claim 1 wherein assessing the similarity between the training graph database and the neural graph database comprises generating a comparison report indicating the differences between the test graph database with the neural graph database.

3. The method of claim 1 or 2 wherein the first plurality of associations comprise a plurality of percentage values indicating a percentage similarly between at least one of the plurality of audio metric identifiers of each of the first converted set of the plurality of training audio files and at least one of the plurality of audio metric identifiers of each of the second converted set of the plurality of training audio files.

4. The method of any preceding claim wherein the audio metric identifiers comprise one or more of a range of frequencies, a frequency threshold, a sound intensity, tonal purity and pitch, a spectral envelope.

5. The method of any preceding claim wherein the first format is MP3.

6. A system for assessing similarity between audio files comprising a processor configured to:
import training data in the form of a plurality of training audio files in a first format;
import test data in the form a plurality of test audio files in the first format;
convert the training audio files from the first format to a second format, the second format comprising a plurality of audio metric identifiers;
receive an input of a first plurality of associations between a first converted set of the plurality of training audio files and a second converted set of the plurality of training audio files to create a training graph database;
convert the test audio files from the first format to the second format;
receive an input of a second plurality of associations between a first set of the plurality of test audio files and a second set of the plurality of test audio files to create a test graph database;
input the training graph database into a neural network to train the network;
generate via the neural network a third plurality of associations between the first set of the plurality of test audio files and the second set of the plurality of test audio files to create a neural graph database;
compare the test graph database with the neural graph database ;
assess a similarity between the training graph database with the neural graph database ;
update the neural network based on the assessed similarity between the training graph database and the neural graph database.

7. The system of claim 6 wherein the processor is configured in at least one of a server, a mobile communication device, a laptop computer, a desktop computer or any combination thereof.

8. A method for searching audio files comprising:
receiving an identifier of a first audio file; the audio file comprising a plurality of audio metric identifiers;
searching a database of audio files, the audio files comprising a plurality of audio metric identifiers;
comparing the plurality of audio metric identifiers of the first audio file to the a plurality of audio metric identifiers of the of audio files in the database of audio files;
outputting a list of audio files from the database of audio files, wherein the list comprises audio files from the database wherein the values of the plurality of audio metric identifiers correspond to values of the plurality of audio metric identifiers of the first audio file.

9. The method of claim 8 wherein the audio metric identifiers comprise one or more of a range of frequencies, a frequency threshold, a sound intensity, tonal purity and pitch, a spectral envelope.

10. The method of claim 8 or 9 wherein the values of the plurality of audio metric identifiers correspond in terms of a percentage similarity to the values of the plurality of audio metric identifiers of the first audio file.

11. The method of claim 10 wherein the identifier of a first audio file further comprises a selected range of percentage similarity for at least one of the a plurality of audio metric identifiers.

12. A system for searching audio files comprising, a processor configured to:
receive an identifier of a first audio file; the audio file comprising a plurality of audio metric identifiers;
search a database of audio files, the audio files comprising a plurality of audio metric identifiers;
compare the plurality of audio metric identifiers of the first audio file to the a plurality of audio metric identifiers of the of audio files in the database of audio files;
output a list of audio files from the database of audio files, wherein the list comprises audio files from the database wherein the values of the plurality of audio metric identifiers correspond to values of the plurality of audio metric identifiers of the first audio file.
